# EUROPEAN PATENT APPLICATION

(11) **EP 4 052 573 A1**
(43) Date of publication of application: **07.09.2022**
(21) Application number: 22156357.0
(22) Date of filing: 11.02.2022
(51) Int. Cl.: A01M 7/00, B05B 9/08, B05B 7/06

(54) **FLUID DELIVERY SYSTEMS FOR USE WITH POWER TOOLS**

(30) Priority: 03.03.2021 US 202163156132 P
(71) Applicant: Techtronic Cordless GP, Anderson, SC 29621 (US)
(72) Inventor: HOFFMAN, Ronald J., Iva, 29655 (US); HOLMAN, Christopher A., Clemson, 29631 (US); REED, Scott W., Pelzer, 29669 (US)
(74) Representative: Novagraaf Group

(57) **Abstract**

Fluid delivery systems for use with power tools are provided. A fluid delivery system can include a reservoir configured to contain fluid; a manifold including a plurality of nozzles configured to be disposed at an airflow outlet of the power tool, the manifold being in fluid communication with the reservoir; a pump configured to supply fluid from the reservoir to the manifold to dispense the fluid through at least some of the plurality of nozzles; and an attachment element configured to selectively couple the manifold with the airflow outlet of the power tool.

## Description

### FIELD

The present disclosure relates generally to fluid delivery systems for use with power tools, and more particularly to fluid delivery systems capable of supplying fluid into an airflow path of the power tool to broadcast the fluid as a mist.

### BACKGROUND

Dedicated purpose, gas engine powered backpack misters have been in use in agricultural settings since at least the 1950s. The ability to broadcast fluid chemicals over distances of 10 to 20 feet was particularly useful for chemical application in vineyards and orchards. More recently, these backpack misters have been used to broadcast mosquito control chemicals and for disinfecting large spaces.

In traditional misters, fluid being broadcast travels through gravity fed nozzles disposed at the end of a blower tube. The gravity fed nozzles are generally mounted at a vertical elevation above the end of the blower tube. Fluid exiting the gravity fed nozzles falls from the nozzles in a downward direction. Airflow generated by the blower tube breaks up the fluid from the gravity fed nozzles into droplets which are carried away by the stream of air. Airstream power and the thrust force necessary to break the fluid into discrete droplets for efficient broadcast are generally functions of air density, cross-sectional area, and air velocity.

Airstream power needed to carry droplets is heavily dependent on air velocity. As such, many misters on the order of 800 watts have been used to broadcast fluid at velocities of up to 195 miles per hour. However, these high-power misters use high powered motors and have significant current draws resulting in undesirably short run times. Moreover, failure to maintain these misters in a proper orientation such that the gravity fed nozzles are disposed above the end of the blower tube can temporarily stop broadcasting efforts as the fluid is no longer introduced into the air stream.

Accordingly, improved fluid delivery systems are desired in the art. In particular, fluid delivery systems which provide consistent broadcast capabilities with long operational run times would be advantageous.

### BRIEF DESCRIPTION

Aspects and advantages of the invention in accordance with the present disclosure will be set forth in part in the following description, or may be obvious from the description, or may be learned through practice of the technology.

In accordance with one embodiment, a fluid delivery system for a power tool is provided. The fluid delivery system can include a reservoir configured to contain fluid; a manifold comprising a plurality of nozzles configured to be disposed at an airflow outlet of the power tool, the manifold being in fluid communication with the reservoir; a pump configured to supply fluid from the reservoir to the manifold to dispense the fluid through at least some of the plurality of nozzles; and an attachment element configured to selectively couple the manifold with the airflow outlet.

In accordance with another embodiment, a manifold for a fluid delivery system configured to be coupled with a power tool is provided. The manifold can include a generally ring-shaped structure defining a fluid passageway; a plurality of nozzles in fluid communication with the fluid passageway; and a fluid inlet in fluid communication with the fluid passageway, the fluid inlet being configured to receive fluid from a reservoir, wherein the manifold is configured to dispense the fluid from at least one of the plurality of nozzles into an airflow associated with an airflow outlet of the power tool.

In accordance with another embodiment, a backpack fluid sprayer is provided. The backpack fluid sprayer can include a power tool including a fan and an airflow outlet, the power tool being configured to generate an airflow through the airflow outlet; a fluid reservoir configured to contain fluid, the fluid reservoir being part of a backpack assembly separate from the power tool; a manifold coupled to the power tool adjacent to the airflow outlet, the manifold comprising: a generally ring-shaped structure; and a plurality of nozzles disposed along the generally ring-shaped structure; and a pump configured to supply fluid from the reservoir to the plurality of nozzles, wherein a flow rate of fluid through the plurality of nozzles is controllable by adjusting an operating speed of the pump.

These and other features, aspects and advantages of the present invention will become better understood with reference to the following description and appended claims. The accompanying drawings, which are incorporated in and constitute a part of this specification, illustrate embodiments of the technology and, together with the description, serve to explain the principles of the technology.

### BRIEF DESCRIPTION OF THE DRAWINGS

A full and enabling disclosure of the present invention, including the best mode of making and using the present systems and methods, directed to one of ordinary skill in the art, is set forth in the specification, which makes reference to the appended figures, in which:
FIG. 1 is a rear perspective view of a backpack fluid spraying system in accordance with an exemplary embodiment of the present disclosure;
FIG. 2 is a side view of a manifold of the backpack fluid spraying system disposed on an airflow outlet of a power tool in accordance with an exemplary embodiment of the present disclosure;
FIG. 3 is a perspective view of a manifold in accordance with an exemplary embodiment of the present disclosure;
FIG. 4 is a perspective view of a manifold in accordance with another exemplary embodiment of the present disclosure;
FIG. 5 is a schematic front view of a manifold disposed on an airflow outlet in accordance with an exemplary embodiment of the present disclosure; and
FIG. 6 is a schematic cross-sectional view of a portion of the manifold in accordance with an exemplary embodiment of the present disclosure.

### DETAILED DESCRIPTION

Reference now will be made in detail to embodiments of the present invention, one or more examples of which are illustrated in the drawings. The word "exemplary" is used herein to mean "serving as an example, instance, or illustration." Any implementation described herein as "exemplary" is not necessarily to be construed as preferred or advantageous over other implementations. Moreover, each example is provided by way of explanation, rather than limitation of, the technology. In fact, it will be apparent to those skilled in the art that modifications and variations can be made in the present technology without departing from the scope or spirit of the claimed technology. For instance, features illustrated or described as part of one embodiment can be used with another embodiment to yield a still further embodiment. Thus, it is intended that the present disclosure covers such modifications and variations as come within the scope of the appended claims and their equivalents. The detailed description uses numerical and letter designations to refer to features in the drawings. Like or similar designations in the drawings and description have been used to refer to like or similar parts of the invention.

As used herein, the terms "first", "second", and "third" may be used interchangeably to distinguish one component from another and are not intended to signify location or importance of the individual components. The singular forms "a," "an," and "the" include plural references unless the context clearly dictates otherwise. The terms "coupled," "fixed," "attached to," and the like refer to both direct coupling, fixing, or attaching, as well as indirect coupling, fixing, or attaching through one or more intermediate components or features, unless otherwise specified herein. As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive- or and not to an exclusive- or. For example, a condition A or B is satisfied by any one of the following: A is true (or present) and B is false (or not present), A is false (or not present) and B is true (or present), and both A and B are true (or present).

Terms of approximation, such as "about," "generally," "approximately," or "substantially," include values within ten percent greater or less than the stated value. When used in the context of an angle or direction, such terms include within ten degrees greater or less than the stated angle or direction. For example, "generally vertical" includes directions within ten degrees of vertical in any direction, e.g., clockwise or counter-clockwise.

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

In general, fluid delivery systems described in accordance with one or more embodiments herein can be coupled with power tools, such as leaf blowers, to broadcast fluid - such as pesticides, herbicides, and the like, over a large distance with minimal power draw. The fluid delivery systems can be easily configurable over a plurality of operating conditions and be utilized with different power tools for different applications.

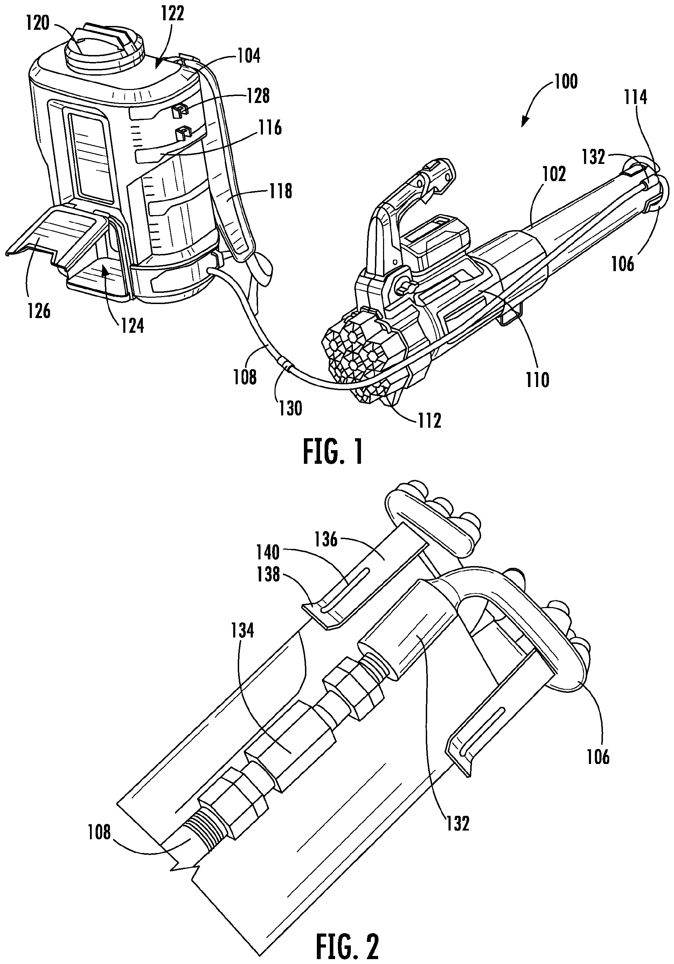

Referring now to the drawings, FIG. 1 illustrates a perspective view of a fluid spraying system 100 including a power tool 102, a fluid reservoir 104, a manifold 106, and a connecting hose 108 fluidly coupling the reservoir 104 with the manifold 106. The power tool 102 can include, for example, a leaf blower configured to generate a stream of high-powered airflow. The leaf blower can be gas powered or electric powered (e.g., battery powered or connectable to a power outlet). The leaf blower can include a housing 110 defining a passageway with an airflow inlet 112 and an airflow outlet 114. A fan (not illustrated) can be disposed in fluid communication with the passageway. The fan can be configured to bias air towards and out of the airflow outlet 114. In a particular embodiment, the fan may include an axial fan configured to bias airflow through the airflow outlet 114.

The reservoir 104 can be configured to contain fluid associated with a dispensing operation. For instance, the fluid can include an herbicide, a fungicide, a germicide, or the like. The reservoir 104 can define indicia 116 which allows the operator to determine a fluid level therein. By way of example, the indicia 116 may include markings on a side of the reservoir 104.

In certain instances, the fluid spraying system 100 can include a backpack spraying system. For example, the reservoir 104 may be part of a backpack assembly. The backpack assembly can include, for instance, one or more straps 118 which allow the operator to wear the reservoir 104 on their body during fluid dispensing operations. The straps 118 can be adjustable such that the operator can adjust the reservoir 104 to fit their body.

A cap 120 may be disposed along the reservoir 104 to allow the operator to selectively close the reservoir 104. The cap 120 may seal an opening which permits the operator to fill the reservoir 104 with fluid. In the illustrated embodiment, the cap 120 (and opening) are disposed along an upper surface 122 of the reservoir 104. In other embodiments, the cap 120 (and opening) can be disposed along a side surface of the reservoir 104. The cap 120 can include a twist cap, a bayonet connection, an interference fit, or the like. One or more vented ports may be included along the reservoir 104 to permit atmospheric pressure regulation during withdrawal of fluid from the reservoir 104 to prevent collapse of the reservoir 104 and to allow for a more consistent draw of fluid therefrom. In an embodiment, the vented port may be integral with the cap 120. In another embodiment, the vented port may be part of a body of the reservoir 104.

The reservoir 104 depicted in FIG. 1 includes a receptacle 124 configured to receive a battery (not shown). A cover 126 may selectively close the receptacle 124, protecting the battery or even preventing the battery from undesirably disconnecting from the reservoir 104 during use. In the illustrated embodiment, the cover 126 is configured to pivot between an open position (as shown) and a closed position. In the open position, the battery may be installed within the receptacle 124. In the closed position, the battery may be protected against environmental damage and the like. In the illustrated embodiment, the receptacle 124 is shown below a fluid containing portion of the reservoir 104. In other embodiments, the receptacle 124 may be disposed at a different relative position with respect to the fluid containing portion of the reservoir 104.

The battery may be configured to power at least a pump (not shown). The pump can be configured to supply fluid from the reservoir 104 to the manifold 106. By way of example, the pump can include a rotary lobe pump, a cavity pump, a rotary gear pump, a piston pump, a diaphragm pump, a screw pump, a gear pump, a hydraulic pump, a rotary vane pump, a peristaltic pump, or the like. The pump may be disposed within the fluid containing portion of the reservoir 104. Alternatively, the pump can be disposed outside of the fluid containing portion of the reservoir 104. In certain instances, the pump can define a variable operating speed. That is, the speed of the pump can be adjustable between a plurality of different speeds. In an embodiment, the speed of the pump can be infinitely variable. As used herein, infinitely variable is intended to refer to a variability without positive stop locations. In such a manner, the operator can adjust the operational speed of the pump to any desired operational speed between a minimum operating speed and a maximum operational speed. In another embodiment, the speed of the pump may be adjustable between a plurality of preset speeds. By way of example, the pump can define a low speed, a medium speed, and a high speed. In an embodiment, the operator can selectively change the operating speed of the pump using one or more user interfaces. The user interface(s) can include, for example, one or more of rotary dials or knobs, pivotable levers, digital inputs, or the like. The user interface(s) may be disposed on the reservoir 104, the power tool 102, the connecting hose 108, the manifold 106, or include a discrete element such as a wireless remote.

In an embodiment, the operational speed of the pump can be at least partially informed by an operational speed of the power tool 102. For instance, the power tool 102 may be in communication with the pump (directly or indirectly) to inform the pump of one or more operational conditions of the power tool 102. Alternatively, the operational speed of the pump can be at least partially informed by a fluid type being dispensed, an angular arrangement of the reservoir 104 or another element of the fluid spraying system 100, or the like. For example, the operator may input information associated with the dispensing operation (e.g., the dispensed fluid type, information relating to the dispensing operation being performed, a desired broadcast distance or broadcast shape, or the like) which automatically adjusts the operational speed of the pump in view of the dispensing operation. In certain instances, high volume applications may warrant a high operational speed of the pump. In other instances, low volume applications may warrant low operational speed of the pump.

The pump may be configured to selectively prevent, or substantially prevent, flow of fluid from the reservoir 104 when the pump is in the off state. For instance, when not being used to dispense fluid, the pump can prevent discharge of fluid from the reservoir 104. In such a manner, fluid flow can be terminated using only the pump without the use of any additional control valve(s). In an embodiment, the pump can define a normally-closed configuration such that when the operator terminates a spraying operation, the pump reverts automatically to a closed configuration to prevent discharge of fluid from the reservoir 104. Alternatively, a valve may be disposed in fluid communication with the pump and automatically revert to a closed configuration when the pump is in the off state. Yet in other embodiments, the valve may be manually adjustable between the open and closed configurations.

An indicator may inform the operator of the operational speed of the pump, a fluid discharge rate (e.g., a volumetric flow rate of fluid being pumped from the reservoir 104), a remaining fluid volume level in the reservoir 104, an anticipated amount of time until depleting fluid from the reservoir 104, or the like. The indicator may be coupled to the reservoir 104, the power tool 102, the connecting hose 108, the manifold 106, or be part of a stand along element, such as part of the aforementioned wireless remote.

The connecting hose 108 can extend from the reservoir 104 and fluidly couple the reservoir 104 with the manifold 106. In an embodiment, the connecting hose 108 can extend from a location below the fluid containing portion of the reservoir 104. In another embodiment, the connecting hose 108 can extend from a vertical elevation corresponding to the fluid containing portion of the reservoir 104. The connecting hose 108 can be coupled to any one or more of an outer surface of the reservoir 104, the power tool 102, or the like by way of one or more couplers 128. The couplers 128 may allow the operator to selectively route the connecting hose 108 in a plurality of configurations, for example, based on whether the operator is left- or right-handed. The couplers 128 may further facilitate easier storage of the connecting hose 108 when the fluid spraying device 100 is not in use.

The fluid spraying device 100 can include an in-line, quick connect interface 130. The in-line, quick connect interface 130 may be disposed along the connecting hose 108. The in-line, quick connect interface 130 may include complementary mating portions which allow the operator to quickly disconnect the manifold 106 from the reservoir 104. In certain embodiments, the in-line, quick connect interface 130 may automatically move to the closed configuration when disconnected such that fluid does not leak from the connecting hose 108 when the operator disconnects the in-line, quick connect interface 130.

The connecting hose 108 may be coupled with the manifold 106 at a fluid inlet 132 of the manifold 106. The fluid inlet 132 may include an interface configured to engage with the connecting hose 108 or hardware disposed at the end thereof. For instance, referring to FIG. 2, the fluid inlet 132 and connecting hose 108 may be separated by an intermediary hardware 134. The intermediary hardware 134 can be configured to interface between the fluid inlet 132 and connecting hose 108. By way of example, the intermediary hardware 134 can include threaded interfaces configured to engage with the fluid inlet 132 and connecting hose 108. The intermediary hardware 134 can define an internal fluid passageway fluidly coupling the fluid inlet 132 with the connecting hose 108.

Referring still to FIG. 2, in an embodiment the manifold 106 can include an attachment element 136 configured to selectively couple the manifold 106 with the airflow outlet 114 of the power tool 102. In the illustrated embodiment, the attachment element 136 includes a plurality of projections extending from the manifold 106. In certain instances, the projections can be integrally formed with the manifold 106. In other instance, the projections can be discrete elements coupled with the manifold 106. In an embodiment, the projections can be spaced apart equidistantly around a perimeter of the manifold 106.

In an embodiment, the attachment element 136 can be coupled to the airflow outlet 114 through an interference fit. An effective inner diameter of the attachment element 136, as measured prior to installation with the airflow outlet 114, may be less than an effective outer diameter of the airflow outlet 114. The operator can slide the manifold 106 onto the airflow outlet 114 such that the effective diameter of the attachment element 136 increases, thus forming the interference fit with the airflow outlet 114.

A guide 138 may be formed along the attachment element 136 to facilitate initial installation on the airflow outlet 114. The guide 138 can include, for instance, a ramped interface. Using the guide 138, the operator can generally align the manifold 106 with respect to the airflow outlet 114 prior to translating the manifold 106 or airflow outlet 114 in a direction toward one another. One or more secondary attachment elements may be utilized to further secure the manifold 106 on the airflow outlet 114. In the illustrated embodiment, the secondary attachment element includes a slot 140 disposed along the projection. The slot 140 can be configured to receive a fastener. The slot 140 can be configured to align with an opening on the airflow outlet 114 configured to receive the fastener so as to permit the operator to fasten the manifold to the airflow outlet 114. Another exemplary secondary attachment element includes one or more zip ties which can extend around a perimeter of the airflow outlet 114.

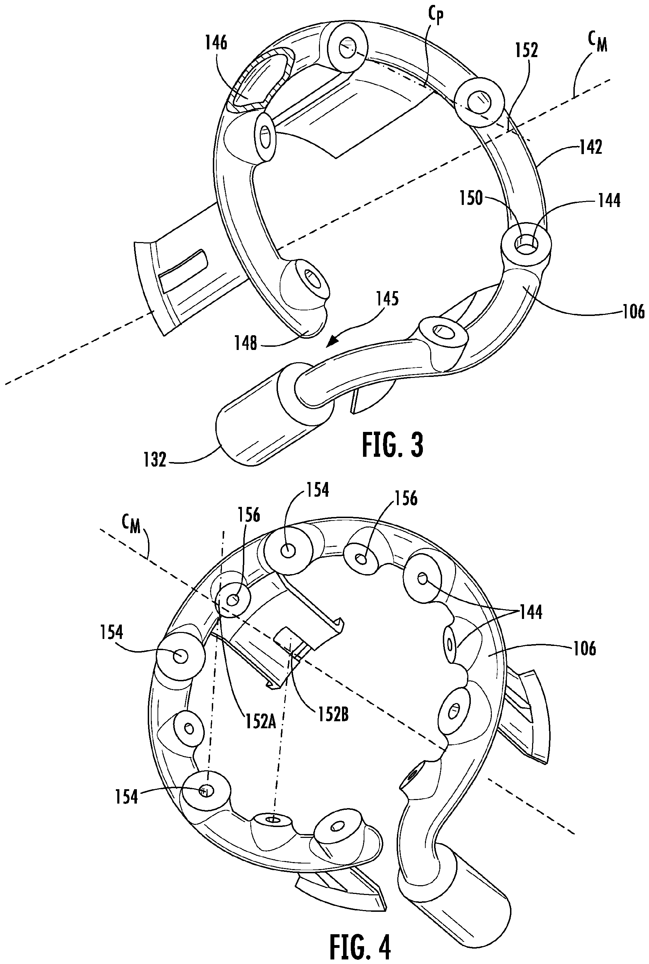

FIG. 3 illustrates a perspective view of the manifold 106 in accordance with an embodiment. As depicted, the manifold 106 can include a generally ring-shaped structure 142 having a plurality of ports 144. The generally ring-shaped structure 142 is shown as a discontinuous ring. The discontinuous ring can define an end 148 that terminates prior to completing a full 360-degree revolution (e.g., a closed circle). By way of example, the discontinuous ring can extend in a circular manner no greater than 359 degrees, such as no greater than 355 degrees, such as no greater than 350 degrees, such as no greater than 345 degrees, such as no greater than 340 degrees, such as no greater than 335 degrees, such as no greater than 330 degrees, such as no greater than 325 degrees, such as no greater than 320 degrees, such as no greater than 315 degrees, such as no greater than 310 degrees, such as no greater than 305 degrees, such as no greater than 300 degrees. Terminating the manifold 106 prior to completing a full 360-degree ring may prevent fluid from recirculating and traveling around the manifold 106 without exiting the manifold 106 through the ports 144.

A gap 145 may be formed between the end 148 of the manifold 106 and the fluid inlet 132. In certain instances, the gap 145 may have a size generally corresponding with a distance between adjacent ports 144 such that the gap 145 does not impact the relative position of the ports 144 with respect to one another. In this regard, the gap 145 does not affect the spatial arrangement of the manifold 106.

The gap 145 can provide flexibility to the manifold 106, allowing the generally ring-shaped structure 142 to more readily deform. Accordingly, the manifold 106 can be more easily installed on the power tool 102 at the airflow outlet 114. That is, by expanding the gap 145, the manifold 106 may define a larger circumference which can allow the generally ring-shaped structure 142 to be more readily translated onto the power tool 102. Once in position, the gap 145 can return to an undeformed, or less deformed, state whereby the manifold 106 is secured to the power tool 102, e.g., the manifold 106 forms an interference fit with the power tool 102.

In certain instances, the gap 145 can allow the manifold 106 to be installed on power tools 102 having airflow outlets 114 with different dimensions. For instance, the manifold 106 can define an undeformed (initial) state prior to being coupled with the power tool 102. The gap 145 of the manifold 106 can be expanded to define a maximum deformed state where the generally ring-shaped structure 142 has a maximum circumference. The manifold 106 can be used with power tools 102 having circumferences at the airflow outlet 114 that are anywhere between or including the circumference of the generally ring-shaped structure 142 in the undeformed state and the expanded state.

The generally ring-shaped structure 142 can define a fluid passageway 146 extending from the fluid inlet 132. The fluid passageway 146 can be at least partially defined by the generally ring-shaped structure 142 of the manifold 106. The fluid passageway 146 can extend around the generally ring-shaped structure 142 and terminate at, or adjacent to, the end 148 of the generally ring-shaped structure. The ports 144 can be in fluid communication with the fluid passageway 146. In this regard, fluid entering the fluid inlet 132 can pass through the fluid passageway 146 and enter one or more of the plurality of ports 144 for broadcast.

As depicted, each one of the ports 144 can include an opening 150 fluidly coupling the fluid passageway 146 with an external environment. Each one of the openings 150 can define a centerline, such as centerline C_{P}. The manifold 106 can define a centerline C_{M}. In an embodiment, the centerline C_{M} can be a central axis of the generally ring-shaped structure 142. In certain instances, the generally ring-shaped structure 142 can lie along a plane and the centerline C_{M} can extend perpendicular to the plane.

In an embodiment, the centerline C_{P} of at least one of the openings 150 can be canted relative to the centerline C_{M} of the manifold 106. That is, the centerline C_{P} of at least one of the openings 150 can be angularly offset from the centerline C_{M} of the manifold 106. By way of example, C_{P} and C_{M} can be angularly offset by at least 1 degree, such as by at least 2 degrees, such as by at least 3 degrees, such as by at least 4 degrees, such as by at least 5 degrees, such as by at least 10 degrees, such as by at least 15 degrees, such as by at least 20 degrees. In an embodiment, the centerlines C_{P} and C_{M} can intersect one another at an intersection point 152. In a more particular embodiment, the centerlines C_{P} of at least two of the openings 150 can intersect the centerline C_{M} of the manifold 106 at the same intersection point 152. In yet a more particular embodiment, the centerlines C_{P} of all of the openings 150 can intersect the centerline C_{M} of the manifold 106 at the same intersection point 152. In this regard, a relative canted angle of each of the openings 150 can be approximately equal.

In certain instances, the canted openings 150 can be configured to dispense fluid towards a center of the airflow path a distance downstream of the airflow outlet 114. That is, the canted openings 150 can broadcast fluid in front of the airflow outlet 114 a distance downstream of the manifold 106. The effective distance fluid is dispensed downstream of the airflow outlet 114 may vary based at least in part on the volumetric flow rate of the fluid, fluid density, fluid flow rate characteristics particular to the fluid being dispensed, speed of airflow at the airflow outlet 114, diameter of the manifold 106, diameter of the airflow outlet 114, or any combination thereof. Canting the openings 150 so that they dispense fluid deeper into the airflow path, i.e., closer to the centerline C_{M}, may increase broadcast effectiveness, distance, or both. For example, the flow rate of air exiting the airflow outlet 114 may generally increase from the perimeter of the airflow outlet 114 towards the centerline C_{M} as a result of drag incurred on the airflow by the walls of the power tool 102. Biasing fluid closer to the centerline C_{M} may thus increase the power of the airflow exhibited on the fluid, thereby increasing solubility of the particles in the air (i.e., the air can more readily break the fluid into droplets) or even increasing broadcast distance.

In the illustrated embodiment, the manifold 106 includes six ports 144. The six ports 144 are equally, or generally equally, spaced apart from one another around the circumference of the generally ring-shaped structure 142. Moreover, the six ports 144 are generally equally shaped, sized, and oriented as measured with respect to one another and the centerline C_{M}. Referring to FIG. 4, in accordance with another exemplary embodiment, the manifold 106 can include 12 ports 144. The ports 144 depicted in FIG. 4 include two sets of ports - a first set of ports 154 and a second set of ports 156. The first and second sets of ports 154 and 156 can define different sizes, different shapes, different orientations, or any combination thereof as measured with respect to one another. For instance, the first set of ports 154 can be canted relative to the centerline C_{M} at a first relative angle while the second set of ports 154 are canted relative to the centerline C_{M} at a second relative angle different from the first relative angle. By way of example, the difference of relative angles between the first and second set of ports 154 and 156, as measured with respect to the centerline C_{M}, can be at least 1 degree, such as at least 2 degrees, such as at least 3 degrees, such as at least 4 degrees, such as at least 5 degrees, such as at least 10 degrees. This difference in angular offset with respect to the centerline C_{M} can increase uniformity of the fluid dispense pattern. For example, while the first set of fluid ports 154 broadcast the fluid to a first intersection point 152A, the second set of fluid ports 156 can broadcast the fluid to a second intersection point 152B different from the first intersection point 152A. Thus, the fluid can be broadcast at different depths of the airflow path. In other embodiments, the ports 144 can further define a third set of ports (not shown), a fourth set of ports (not shown), or any other number of sets of ports. Additionally, in certain instances, the ports 144 may be individually different from one another such that no two ports share the same size, shape, or orientation.

In the illustrated embodiment, the ports 144 of the first and second sets of ports 154 and 156 are staggered with respect to one another. That is, each pair of adjacent ports of the first set of ports 154 is spaced apart by one of the second set of ports 156. In other embodiment, the staggering configuration may be different. For instance, each pair of adjacent ports of the first set of ports 154 may be spaced apart by two of the second set of ports 156. In another embodiment, ports 144 disposed on a first side of the generally ring-shaped structure 142 can define a first characteristic and ports 144 disposed on a second side of the generally ring-shaped structure 142 can define a second characteristic different from the first characteristic. Other patterns and arrangements of ports 144 are contemplated herein without deviating from the scope of the disclosure.

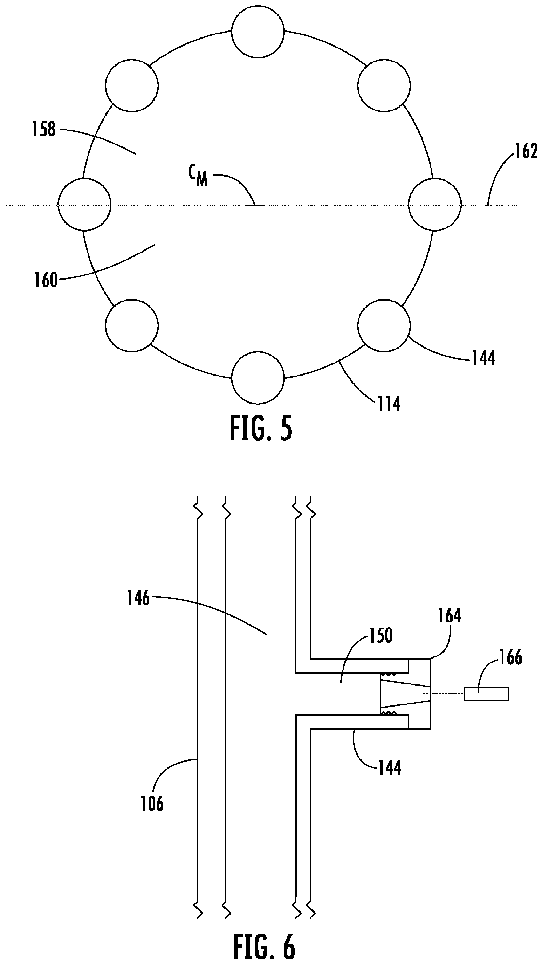

In an embodiment, the ports 144 can be disposed around at least half of the perimeter of the airflow outlet 114. That is, the ports 144 do not need to be grouped together in a small area of the airflow outlet 114 as with traditional misting assemblies. Referring, for example, to FIG. 5, the airflow outlet 114 can define a first half 158 and a second half 160. The first and second halves 158 and 160 can be separated by a dividing line 162 bisecting the airflow outlet 114. In an embodiment the dividing line 162 can extend generally horizontally such that the first half 158 is disposed above the second half 160. In an embodiment, the manifold 106 can include at least one port 144 disposed in the first half 158 and at least one port 144 disposed in the second half 160. In a more particular embodiment, the manifold 106 can include at least two ports 144 disposed in the first half 158 and at least two ports 144 disposed in the second half 160. In another embodiment, the manifold 106 can include at least one port 144 disposed in the first half 158 and at least two ports 144 disposed in the second half 160. In yet another embodiment, the manifold 106 can include at least two ports 144 disposed in the first half 158 and at least one port 144 disposed in the second half 160. In an embodiment, the number of ports 144 in the first half 158 of the manifold 106 can be different than the number of ports 144 in the second half 160 of the manifold 106. In another embodiment, the number of ports 144 in the first half 158 can be the same as the number of ports 144 in the second half 160. In an embodiment, the ports 144 can be arranged so as to be reflectively symmetrical about the dividing line 162. In another embodiment, the ports 144 can be rotationally symmetrical about the centerline C_{M}. However, rotational or reflective symmetry is not required in accordance with all of the embodiments described herein. In certain instances, the dividing line 162 can intersect one or more of the ports 144.

Referring to FIG. 6, in an embodiment, at least one of the ports 144 can be configured to receive a nozzle 164. The nozzle 164 can be interchangeable with the port 144. Moreover, the nozzle 164 can be removable from the port 144. For instance, the nozzle 164 may be threadably engaged with the port 144. Other exemplary methods of interfacing the nozzle 164 and port 144 include an interference fit, adhesive(s), bayonet connections, and the like. O-rings (not shown) may seal the interface between the nozzles 164 and the ports 144.

In an embodiment, the nozzle 164 can be selected from a group of nozzles 164 each defining a different attribute or characteristic as compared to one another. For instance, the group of nozzles 164 can include a first nozzle and a second nozzle. The first nozzle can define a first effective diameter configured to pass fluid therethrough and the second nozzle can define a second effective diameter configured to pass fluid therethrough that is different from the first effective diameter. By way of another non-limiting example, a relative pitch of the nozzle (i.e., the angle of taper of an opening in the nozzle) may vary between nozzles. In this regard, the fluid flow characteristics of the manifold 106, or even each individual port 144, can be customized based on the spraying application.

In certain instances, at least one of the nozzles 164 can be selectively closable. That is, the at least one nozzle 164 can be configured to be fluidly isolated from the external environment. This may be desirable, for example, when an operator wishes to decrease the number of ports 144 dispensing fluid. Alternatively, the operator may decide to selectively close ports 144 associated with the first or second halves 158 or 160 in view of an anticipated operation, environmental conditions such as wind and the like, or in view of other considerations. In certain instances, selectively closing the port(s) 144 may be performed by using a plug 166. The plug 166 may be insertable in the nozzle 164 to prevent dispensing of fluid. In other instances, selectively closing the port(s) 144 may be performed by operating on the port 144 or nozzle 164. For instance, by way of non-limiting example, the operator can close the port 144 by rotating the nozzle 164 to a closed position.

In an embodiment, the manifold 106 can have a single-piece construction. That is, for example, the manifold 106 can have a unitary construction. In certain instances, the manifold 106 can be formed using a water injection technique (WIT). The WIT process is capable of making hollow, or semi-hollow, parts by injecting water into a molded part while the material is still molten, or semi-molten. Use of WIT processes in forming the manifold 106 can reduce product cycle time by more rapidly cooling the part.

In certain instances, the fluid spraying system 100 may be configured to be retrofit on an existing power tool 102. That is, the power tool 102 need not have any specific arrangement for use of the fluid spraying system 100. In this regard, the operator can use the fluid spraying system 100 on a range of different power tools. For example, in additional to being usable with a leaf blower, the fluid spraying system 100 may be utilized with a weed sprayer. Moreover, the fluid spraying system 100 may be configurable to be used as a stand-alone unit, independent of the power tool 102. For instance, the intermediary hardware 134 may have a rigid construction such that the operator can hold the manifold 106 through the intermediary hardware 134 independent of an underlying power tool 102. Using the fluid spraying system 100 without the power tool 102 may allow the operator to create a more localized mist having a smaller broadcast distance. That is, without generation of an airflow by the power tool 102, the broadcast distance can be defined by fluid spraying system 100 (e.g., the operational speed and capabilities of the pump).

One limitation of traditional dispensing assemblies is the use of gravity fed nozzles for dispensing fluid into an airflow path. These gravity fed systems typically only dispense fluid at desired flow rates when the nozzles are disposed in an ideal orientation with respect to gravity (i.e., oriented downward and disposed above the airflow path). Flipping the nozzles upside down such that they are disposed below the airflow path greatly decreases fluid flow rate, thereby effecting the broadcast operation. To overcome these challenges, embodiments described herein utilize a manifold extending around at least a majority of the airflow outlet 114. Thus, fluid can exit the ports 144 regardless of orientation. Moreover, by pressurizing the fluid using the pump, the fluid can be dispensed at a constant, or generally constant, flow rate through all of the ports 144 regardless of relative orientation of the manifold 106 with respect to gravity. As a result, the fluid spraying system 100 described in herein can operate without electrostatically charging the fluid. That is, the fluid is not electrostatically, or otherwise, charged for effective broadcast. To the contrary, traditional misting assemblies frequently require electrostatically charged fluid to associate the fluid into the airflow path. This can be the result of the fluid not fully entering the airflow path as a result of, e.g., gravity fed ports disposed above the blower end. While effective at creating mists, electrostatically charged fluid more readily interacts with the environment upon broadcast, resulting in less than desirable misting patterns. Moreover, electrostatically charged fluid may not settle equally onto all objects and surfaces in the broadcast range.

Further aspects of the invention are provided by one or more of the following embodiments:
Embodiment 1. A fluid delivery system for a power tool, the fluid delivery system comprising: a reservoir configured to contain fluid; a manifold comprising a plurality of nozzles configured to be disposed at an airflow outlet of the power tool, the manifold being in fluid communication with the reservoir; a pump configured to supply fluid from the reservoir to the manifold to dispense the fluid through at least some of the plurality of nozzles; and an attachment element configured to selectively couple the manifold with the airflow outlet.
Embodiment 2. The fluid delivery system of any one or more of the embodiments, wherein the reservoir is part of a backpack assembly configured to be worn by an operator during use of the power tool.
Embodiment 3. The fluid delivery system of any one or more of the embodiments, wherein the plurality of nozzles comprises at least two nozzles, wherein one of the at least two nozzles is configured to be disposed in a first half of the airflow outlet, and wherein another one of the at least two nozzles is configured to be disposed in a second half of the airflow outlet.
Embodiment 4. The fluid delivery system of any one or more of the embodiments, wherein each of the plurality of nozzles includes an opening configured to dispense fluid, wherein the openings of the nozzles define centerlines, and wherein the centerlines of at least two of the plurality of nozzles intersect at a location generally along a centerline of the airflow outlet.
Embodiment 5. The fluid delivery system of any one or more of the embodiments, wherein the manifold comprises a generally ring-shaped structure, and wherein at least some of the plurality of nozzles are generally equally spaced apart from one another along the generally ring-shaped structure.
Embodiment 6. The fluid delivery system of any one or more of the embodiments, wherein at least one of the plurality of nozzles is selectively closable.
Embodiment 7. The fluid delivery system of any one or more of the embodiments, wherein the manifold is coupled to the reservoir through an in-line, quick connect interface.
Embodiment 8. The fluid delivery system of any one or more of the embodiments, wherein a flow rate of dispensed fluid is controllable by adjusting an operating speed of the pump.
Embodiment 9. The fluid delivery system of any one or more of the embodiments, wherein the attachment element comprises a plurality of projections extending from the manifold and configured to form an interference fit with an outer surface of the airflow outlet of the power tool.
Embodiment 10. The fluid delivery system of any one or more of the embodiments, wherein the fluid delivery system is separate from the power tool, and wherein the fluid delivery system is configurable to operate with a plurality of different types of power tools.
Embodiment 11. A manifold for a fluid delivery system configured to be coupled with a power tool, the manifold comprising: a generally ring-shaped structure defining a fluid passageway; a plurality of nozzles in fluid communication with the fluid passageway; and a fluid inlet in fluid communication with the fluid passageway, the fluid inlet being configured to receive fluid from a reservoir, wherein the manifold is configured to dispense the fluid from at least one of the plurality of nozzles into an airflow associated with an airflow outlet of the power tool.
Embodiment 12. The manifold of any one or more of the embodiments, wherein at least some of the plurality of nozzles are generally equally spaced apart from one another along the generally ring-shaped structure.
Embodiment 13. The manifold of any one or more of the embodiments, wherein at least one of the plurality of nozzles is selectively closable.
Embodiment 14. The manifold of any one or more of the embodiments, wherein the plurality of nozzles each include an opening defining a centerline, and wherein the centerline of at least one of the nozzles is canted relative to a centerline of the manifold.
Embodiment 15. The manifold of any one or more of the embodiments, wherein at least one of the plurality of nozzles is disposed in a first half of the generally ring-shaped structure, and wherein at least one of the plurality of nozzles is disposed in a second half of the generally ring-shaped structure.
Embodiment 16. The manifold of any one or more of the embodiments, wherein the manifold further comprises an attachment element configured to selectively couple the manifold with the airflow outlet, and wherein the attachment element is integral with the generally ring-shaped structure.
Embodiment 17. A backpack fluid sprayer comprising: a power tool including a fan and an airflow outlet, the power tool being configured to generate an airflow through the airflow outlet; a fluid reservoir configured to contain fluid, the fluid reservoir being part of a backpack assembly separate from the power tool; a manifold coupled to the power tool adjacent to the airflow outlet, the manifold comprising: a generally ring-shaped structure; and a plurality of nozzles disposed along the generally ring-shaped structure; and a pump configured to supply fluid from the reservoir to the plurality of nozzles, wherein a flow rate of fluid through the plurality of nozzles is controllable by adjusting an operating speed of the pump.
Embodiment 18. The backpack fluid sprayer of any one or more of the embodiments, wherein at least one of the plurality of nozzles is disposed in a first half of the generally ring-shaped structure, and wherein at least one of the plurality of nozzles is disposed in a second half of the generally ring-shaped structure.
Embodiment 19. The backpack fluid sprayer of any one or more of the embodiments, wherein the manifold is coupled to the reservoir through an in-line, quick connect interface.
Embodiment 20. The backpack fluid sprayer of any one or more of the embodiments, wherein the manifold is formed using water injection.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal language of the claims.

## Claims

1. A fluid delivery system for a power tool, the fluid delivery system comprising:
a reservoir configured to contain fluid;
a manifold comprising a plurality of nozzles configured to be disposed at an airflow outlet of the power tool, the manifold being in fluid communication with the reservoir;
a pump configured to supply fluid from the reservoir to the manifold to dispense the fluid through at least some of the plurality of nozzles; and
an attachment element configured to selectively couple the manifold with the airflow outlet.

2. The fluid delivery system of claim 1, wherein the reservoir is part of a backpack assembly configured to be worn by an operator during use of the power tool.

3. The fluid delivery system of claims 1 or 2, wherein the plurality of nozzles comprises at least two nozzles, wherein one of the at least two nozzles is configured to be disposed in a first half of the airflow outlet, and wherein another one of the at least two nozzles is configured to be disposed in a second half of the airflow outlet.

4. The fluid delivery system of claims 1, 2 or 3, wherein each of the plurality of nozzles includes an opening configured to dispense fluid, wherein the openings of the nozzles define centerlines, and wherein the centerlines of at least two of the plurality of nozzles intersect at a location generally along a centerline of the airflow outlet.

5. The fluid delivery system of claims 1, 2, 3 or 4, wherein the manifold comprises a generally ring-shaped structure, and wherein at least some of the plurality of nozzles are generally equally spaced apart from one another along the generally ring-shaped structure.

6. The fluid delivery system of claims 1, 2, 3, 4 or 5, wherein at least one of the plurality of nozzles is selectively closable.

7. The fluid delivery system of claims 1, 2, 3, 4, 5 or 6, wherein the manifold is coupled to the reservoir through an in-line, quick connect interface.

8. The fluid delivery system of claims 1 2, 3, 4, 5, 6 or 7, wherein a flow rate of dispensed fluid is controllable by adjusting an operating speed of the pump.

9. The fluid delivery system of claims 1, 2, 3, 4, 5, 6, 7 or 8, wherein the attachment element comprises a plurality of projections extending from the manifold and configured to form an interference fit with an outer surface of the airflow outlet of the power tool.

10. The fluid delivery system of claims 1, 2, 3, 4, 5, 6, 7, 8 or 9, wherein the fluid delivery system is separate from the power tool, and wherein the fluid delivery system is configurable to operate with a plurality of different types of power tools.

11. A manifold for a fluid delivery system configured to be coupled with a power tool, the manifold comprising:
a generally ring-shaped structure defining a fluid passageway;
a plurality of nozzles in fluid communication with the fluid passageway; and
a fluid inlet in fluid communication with the fluid passageway, the fluid inlet being configured to receive fluid from a reservoir,
wherein the manifold is configured to dispense the fluid from at least one of the plurality of nozzles into an airflow associated with an airflow outlet of the power tool.

12. The manifold of claim 11, wherein at least some of the plurality of nozzles are generally equally spaced apart from one another along the generally ring-shaped structure.

13. The manifold of claims 11 or 12, wherein at least one of the plurality of nozzles is selectively closable.

14. The manifold of claims 11, 12 or 13, wherein the plurality of nozzles each include an opening defining a centerline, and wherein the centerline of at least one of the nozzles is canted relative to a centerline of the manifold.

15. The manifold of claims 11, 12, 13 or 14, wherein at least one of the plurality of nozzles is disposed in a first half of the generally ring-shaped structure, and wherein at least one of the plurality of nozzles is disposed in a second half of the generally ring-shaped structure.
